# EUROPÄISCHE PATENTSCHRIFT

(11) **EP 3 058 224 B1**
(45) Veröffentlichungstag und Bekanntmachung des Hinweises auf die Patenterteilung: **27.04.2022**
(21) Anmeldenummer: 14799339.8
(22) Anmeldetag: 16.10.2014
(51) Int. Cl.: F04B 39/06, F04B 35/04, F04B 15/04, F04C 18/16, F04C 23/00, F04C 29/00, H01B 7/28, H02K 3/30, H02K 3/44

(54) **VERDICHTER**
COMPRESSOR
COMPRESSEUR

(30) Priorität: 16.10.2013 DE 102013017147
(43) Veröffentlichungstag der Anmeldung: 24.08.2016
(73) Patentinhaber: GEA Refrigeration Germany GmbH, 13509 Berlin (DE)
(72) Erfinder: SANDKÖTTER, Wolfang, 13509 Berlin (DE)
(74) Vertreter: Mederle-Hoffmeister, Stefan
(86) Internationale Anmeldenummer: PCT/EP2014/002787
(87) Internationale Veröffentlichungsnummer: WO 2015/055311

(56) Entgegenhaltungen:
- EP-A1- 0 791 938
- EP-A1- 1 306 859
- CN-A- 101 290 005
- JP-A- H05 252 680
- JP-A- H09 320 357
- US-A- 5 688 433
- US-A1- 2006 137 899

## Beschreibung

Die vorliegende Erfindung betrifft einen Verdichter gemäß dem Oberbegriff des Patentanspruchs 1, sowie ein Verfahren zur Herstellung eines Verdichters gemäß Anspruch 5.

Verdrängerverdichter zum Verdichten von NH₃ sind in der heutigen Zeit aufgrund der gewünschten verringerten Verwendung von halogenierten Kohlenwasserstoffen als Kältemittel, die insbesondere aufgrund ihres relativ hohen Treibhauspotentials in die Diskussion geraten sind, von zunehmendem Interesse und werden in vielen Bereichen des täglichen Lebens eingesetzt.

Um eine jeweilige anwendungsspezifische Aufgabenstellung zufriedenstellend erfüllen zu können, stehen Verdichter unterschiedlicher Bauweise zur Verfügung. Es seien an dieser Stelle beispielhaft Hubkolbenverdichter oder Schraubenverdichtergenannt.

Im Bereich der Hubkolbenverdichter und auch der Schraubenverdichter gibt es halbhermetische und hermetische Ausführungsformen, die einen Elektromotor aufweisen, der wenigstens teilweise NH₃-gekühlt ist. D.h. der Elektromotor des in einer Kälteanlage befindlichen NH3-Verdichters wird wenigstens teilweise durch NH₃ gekühlt, wobei die Kühlung in der Regel mit Sauggas, d.h. expandiertem, zu verdichtendem NH3 oder, bei zweistufigen Verdichtern auch mit Mitteldruckgas, also Sauggas für eine zweite Verdichterstufe erfolgt.

Aufgrund der korrosiven Wirkung von NH₃ sind die Motorwicklungen von NH3-Verdichtern gemäß dem Stand der Technik (interner Stand der Technik der Anmelderin) aus Aluminium gefertigt. Dies bedingt aufgrund einer relativ schlechten Leitfähigkeit von Aluminium einen relativ großen Querschnitt der Wicklungen. Dadurch vergrößert sich der Motor und auch das druckfeste Motorgehäuse, was zu einem hohen Gewicht der entsprechenden Verdichter führt. Außerdem bleiben die Wirkungsgrade von Aluminium-Wicklungen trotz der größeren Baugröße unterhalb denen von Motoren mit Wicklungen aus besser leitfähigen Materialien.

Ferner sind aus der US 5 688 433 A eine Kältemaschine welche ein Kältemittel verwendet welches hauptsächlich Ammoniak aufweist, eine Arbeitsmedienzusammensetzung zur Verwendung in einer Kältemaschine sowie ein Verfahren zum Schmieren eines Ammoniakkompressors bekannt. Die Kältemaschine weist einen Ammoniakverdichter und einen Elektromotor auf. Der Elektromotor ist direkt an den Ammoniakverdichter angeschlossen. Die Motorwicklungen sind dabei durch eine hermetische Abdichtung vor einem Kontakt mit dem Kältemittel geschützt, so dass sie keinen Kontakt mit Ammoniak erfahren.

Aus der JP H05 252680 A ist ein elektrischer Leiter bekannt, welcher eine Zwischenbeschichtungsschicht aus einem ammoniakbeständigen Metall sowie eine ammoniakbeständige elektrische Isolierung auf der Metallbeschichtung aufweist. Diese aus mehreren Lagen aufgebaute Struktur ist umständlich und teuer in der Herstellung.

Ausgehend hiervon ist es die Aufgabe der vorliegenden Erfindung, einen Verdichter, insbesondere semihermetischen oder hermetischen Verdrängerverdichter, zum Verdichten von NH₃ anzugeben, der gegenüber Verdichtern gemäß dem Stand der Technik möglichst leicht, kompakt und effizient ist. Ferner ist es Aufgabe der vorliegenden Erfindung, ein entsprechendes Verfahren zur Herstellung eines solchen Verdichters anzugeben.

Diese Aufgabe wird erfindungsgemäß durch einen Verdichter gemäß Patentanspruch 1, sowie hinsichtlich des verfahrenstechnischen Aspekts durch ein Verfahren mit den Merkmalen des Patentanspruchs 5 gelöst.

Die Aufgabenstellung wird apparativ durch einen Verdichter, insbesondere semihermetischen oder hermetischen Verdrängerverdichter, zum Verdichten von NH₃, der einen wenigstens teilweise NH₃-gekühlten Elektromotor mit Motorwicklungen aufweist, gelöst, wobei die Motorwicklungen aus Kupfer gefertigt sind und eine ammoniakbeständige Beschichtung aufweisen. Die Beschichtung ist aus einem extrudierbaren Material gefertigt bzw. extrudiert. Die Motorwicklungen und die Beschichtung sind ko-extrudiert, was eine kostengünstige und einfache Herstellung gewährleistet.

Es sei an dieser Stelle angemerkt, dass ein erfindungsgemäßer Verdichter in vielen unterschiedlichen Bauarten, insbesondere als semihermetischer oder hermetischer NH3-Verdichter mit Sauggaskühlung oder Mitteldruckkühlung, weiterhin insbesondere als ein semihermetischer oder hermetischer Schraubenverdichter, als ein semihermetischer oder hermetischer Kompakt-Schraubenverdichter oder als ein halbhermetischer oder hermetischer einstufiger oder zweistufiger Kolbenverdichter realisiert sein kann.

Ferner umfasst der Gedanke der vorliegenden Erfindung ein entsprechendes Verfahren zum Herstellen eines Verdichters, insbesondere semihermetischen oder hermetischen Verdrängerverdichters, zum Verdichten von NH₃, der einen wenigstens teilweise NH₃-gekühlten Elektromotor mit Motorwicklungen aufweist, wobei das Verfahren einen Schritt eines Herstellens der Motorwicklungen aufweist. Der Schritt des Herstellens der Motorwicklungen weist folgende Teilschritte auf:
- ein Fertigen der Motorwicklungen aus dem Werkstoff Kupfer;
- ein Beschichten der Motorwicklungen mit einem ammoniakbeständigen Material.

Die Motorwicklungen und die Beschichtung werden unmittelbar nacheinanderfolgend extrudiert, wobei in diesem Fall die vorstehend genannten Teilschritte unmittelbar nacheinander ausgeführt werden.

Ferner ist im Grundgedanken der vorliegenden Erfindung eine entsprechende Verwendung von aus Kupfer gefertigten Motorwicklungen, die eine ammoniakbeständige Beschichtung aufweisen, für die Herstellung eines Elektromotors eines Verdichters, insbesondere semihermetischen oder hermetischen Verdrängerverdichters, zum Verdichten von NH₃, der einen wenigstens teilweise NH₃-gekühlten Elektromotor mit Motorwicklungen aufweist, enthalten. Die Motorwicklungen und/oder die Beschichtung werden extrudiert . Die Motorwicklungen und die Beschichtung werden in zwei unmittelbar aufeinanderfolgenden Extrudierstufen gebildet.

Weitere optionale Merkmale der Erfindung sind in den Unteransprüchen, sowie der folgenden Figurenbeschreibung angegeben. Die beschriebenen jeweiligen Merkmale können einzeln oder in beliebigen Kombinationen realisiert sein.Die Erfindung wird demnach im Folgenden mit Bezug auf die beiliegenden Zeichnungen anhand von beispielhaften Ausführungsformen beschrieben. In den Zeichnungen zeigen:
Fig. 1 eine schematische Darstellung einer beispielhaften Ausführungsform eines erfindungsgemäßen Verdichters;
Fig. 2 eine Ansicht einer Motorwicklung des Verdichters gemäß Fig.1 im Längsschnitt;und
Fig. 3 eine Ansicht einer Motorwicklung des Verdichters gemäß Fig.1 im Querschnitt.

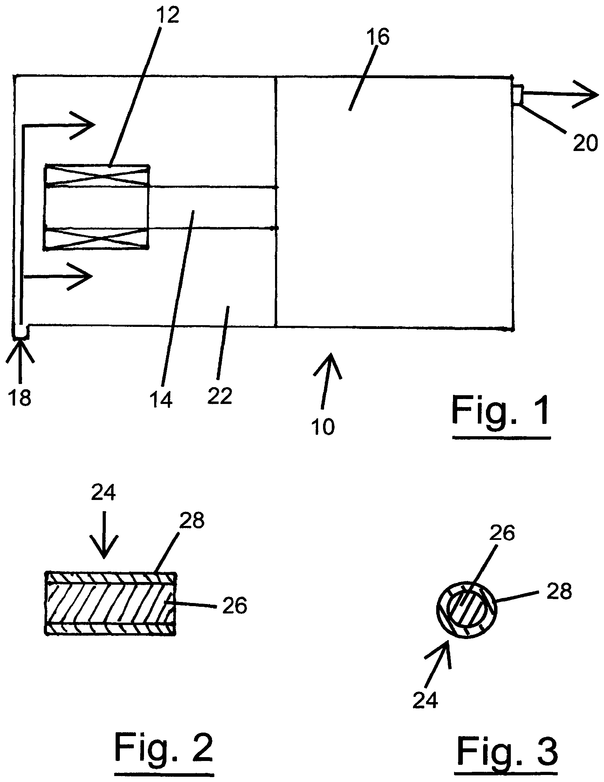

In Fig. 1 ist eine mögliche Ausführungsform eines erfindungsgemäßen Verdichters 10 schematisch als Schnittdarstellung gezeigt. Der Verdichter 10, der in der beschriebenen Ausführungsform als semihermetischer Kompaktschraubenverdichter ausgebildet ist, und für NH₃ als Kältemittel vorgesehen ist, weist einen Elektromotor 12 auf, der einen Antriebswelle 14 antreibt. Die Antriebswelle 14 treibt eine Verdichtereinheit 16 zum Verdichten von des Kältemittels (NH₃) an.

Der Verdichter 10 weist ferner einen Kältemitteleinlass 18 und einen Kältemittelauslass 20 auf. In der vorliegend beschriebenen Ausführungsform sind der Kältemitteleinlass 18 und der Kältemittelauslass 20 derart angeordnet, dass eintretendes Kältemittel einen Motorraum 22 des Verdichters 10 zur Kühlung des Elektromotors 12 durchströmt, bevor es in die Verdichtereinheit 16 eintritt und dort auf einen Enddruck verdichtet und dann dem Kältemittelauslass 20 zugeführt wird.

Es ist anzumerken, dass alternativ hierzu auch eine Kühlung des Elektromotors 12 durch bereits druckbeaufschlagtes Kältemittel, also durch Kältemittel, das durch die Verdichtereinheit 16 bereits auf einen Zwischendruck oder einen Enddruck verdichtet wurde, denkbar ist. Insbesondere seien in diesem Zusammenhang mehrstufige Verdichter erwähnt, bei denen die Motorkühlung mit auf Zwischendruck befindlichem Kältemittel erfolgt, d.h. mit Kältemittel, das mittels einer ersten Verdichtungsstufe auf einen Zwischendruck verdichtet wurde, und das, bevor es einer zweiten Verdichtungsstufe zugeführt wird, zur Kühlung des Elektromotors 12 Verwendung findet.

Um dem als Kältemittel Verwendung findenden NH₃ standzuhalten, weist der Elektromotor 12 Wicklungen 24 auf, die einen Leiter 26, der aus Kupfer gefertigt ist, sowie eine ammoniakbeständige Beschichtung 28, die auf dem Leiter 26 angeordnet ist, aufweisen (vgl. hierzu Fig. 2 und Fig. 3). In der vorliegend beschriebenen Ausführungsform besteht die Beschichtung aus einem Material, welches extrudierbar ist, d.h. mittels eines Extrudierverfahrens verarbeitbar ist. In alternativen Ausführungsformen können auch andere Materialien Verwendung finden.

Sowohl der Leiter 26 als auch die Beschichtung 28 werden bei der Herstellung der hier beschriebenen möglichen Ausführungsform in zwei unmittelbar aufeinanderfolgenden Extrudierstufen extrudiert, was eine schnelle, ökonomische und kostengünstige Herstellung gewährleistet. Denkbar sind alternativ aber auch zwei, insbesondere zeitlich getrennte Extrusionsvorgänge oder aber auch eine Beschichtung des Leiters mittels eines anderen Verfahrens, beispielsweise eines Sprüh- oder Tauchverfahrens. Ferner können sich zwischen dem Leiter 26 und der Beschichtung 28 anderweitige Materialien, insbesondere in einer schichtweisen Anordnung vorgesehene Materialien befinden. Die Beschichtung weist in der beschriebenen Ausführungsform eine Dicke von einigen hundert Mikrometern (µm) auf.

Obwohl die Erfindung anhand von Ausführungsformen mit festen Merkmalskombinationen beschrieben wird, umfasst sie jedoch auch die denkbaren weiteren vorteilhaften Kombinationen, wie sie insbesondere, aber nicht erschöpfend, durch die Unteransprüche angegeben sind. Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichenliste

- 10: Verdichter
- 12: Elektromotor
- 14: Antriebswelle
- 16: Verdichtereinheit
- 18: Kältemitteleinlass
- 20: Kältemittelauslass
- 22: Motorraum
- 24: Wicklung
- 26: Leiter
- 28: Beschichtung

## Patentansprüche

1. Verdichter (10), insbesondere semihermetischer oder hermetischer Verdrängerverdichter, zum Verdichten von NH₃, der einen wenigstens teilweise NH₃-gekühlten Elektromotor (12) mit Motorwicklungen (24) aufweist,
**dadurch gekennzeichnet, dass**
die Motorwicklungen (24) einen Leiter (26), der aus Kupfer gefertigt ist, und eine ammoniakbeständige Beschichtung (28) aufweisen, wobei
der Leiter (26) und die ammoniakbeständige Beschichtung (28) in zwei unmittelbar aufeinanderfolgenden Extrudierstufen gebildet sind.

2. Verdichter (10) nach Anspruch 1,
**dadurch gekennzeichnet, dass**
die Beschichtung (28) aus einem extrudierbaren Material gefertigt ist.

3. Verdichter nach einem der vorangehenden Ansprüche,
**dadurch gekennzeichnet, dass**
die Beschichtung (28) unmittelbar auf dem Leiter (26) angeordnet ist.

4. Verdichter nach einem der vorangehenden Ansprüche
**dadurch gekennzeichnet, dass**
der Verdichter (10) ein semihermetischer oder hermetischer NH3-Verdichter mit Sauggaskühlung oder Mitteldruckkühlung, insbesondere ein semihermetischer oder hermetischer Schraubenverdichter, ein semihermetischer oder hermetischer Kompakt-Schraubenverdichter, ein halbhermetischer oder hermetischer einstufiger oder zweistufiger Kolbenverdichter ist.

5. Verfahren zum Herstellen eines Verdichters (10), insbesondere semihermetischer oder hermetischer Verdrängerverdichter, zum Verdichten von NH₃, der einen wenigstens teilweise NH3-gekühlten Elektromotor (12) mit Motorwicklungen (24) aufweist, wobei das Verfahren einen Schritt eines Herstellens der Motorwicklungen (24) aufweist
**dadurch gekennzeichnet, dass**
der Schritt des Herstellens der Motorwicklungen folgende Teilschritte aufweist:
- ein Fertigen eines Leiters (26) aus dem Werkstoff Kupfer;
- ein Beschichten des Leiters (26) mit einer Beschichtung (28) aus einem ammoniakbeständigen Material, wobei
der Leiter (26) und die ammoniakbeständige Beschichtung (28) in zwei unmittelbar aufeinanderfolgenden Extrudierstufen gebildet werden.

6. Verwendung von Motorwicklungen (24), die einen Leiter (26), der aus Kupfer gefertigt ist, und eine ammoniakbeständige Beschichtung (28) aufweisen, für die Herstellung eines Elektromotors (12) eines Verdrängerverdichters (10), insbesondere semihermetischen oder hermetischen Verdichters, zum Verdichten von NH₃, der einen wenigstens teilweise NH₃
- gekühlten Elektromotor (12) mit Motorwicklungen (24) aufweist, wobei der Leiter (26) und die ammoniakbeständige Beschichtung (28) in zwei unmittelbar aufeinanderfolgenden Extrudierstufen gebildet werden.

## Claims

1. A compressor (10), in particular a semi-hermetic or hermetic displacement compressor, for compressing NH₃, comprising an at least partially NH₃-cooled electric motor (12) with motor windings (24),
**characterized in that**
the motor windings (24) comprise a conductor (26) made of copper and an ammonia-resistant coating (28), wherein
the conductor (26) and the ammonia-resistant coating (28) are formed in two immediately successive extrusion steps.

2. The compressor (10) as claimed in claim 1, **characterized in that**
the coating (28) is made of an extrudable material.

3. The compressor (10) as claimed in one of the preceding claims,
**characterized in that**
the coating (28) is arranged directly on the conductor (26).

4. The compressor (10) as claimed in one of the preceding claims,
**characterized in that**
the compressor (10) is a semi-hermetic or hermetic NH₃ compressor with intake gas cooling or intermediate pressure cooling, in particular a semi-hermetic or hermetic screw compressor, a semi-hermetic or hermetic compact screw compressor, a semi-hermetic or hermetic single-stage or two-stage piston compressor.

5. A method for producing a compressor (10), in particular a semi-hermetic or hermetic displacement compressor, for compressing NH₃, comprising an at least partially NH₃-cooled electric motor (12) with motor windings (24), wherein the method comprises a step of producing the motor windings (24),
**characterized in that**
the step of producing the motor windings comprises the following sub-steps:
- manufacturing a conductor (26) from the material copper;
- coating the conductor (26) with a coating (28) made of an ammonia-resistant material, wherein the conductor (26) and the ammonia-resistant coating (28) are formed in two immediately successive extrusion steps.

6. The use of motor windings (24), comprising a conductor (26) made of copper and an ammonia-resistant coating (28), for the production of an electric motor (12) of a displacement compressor (10), in particular a semi-hermetic or hermetic compressor, for compressing NH₃, comprising an at least partially NH₃-cooled electric motor (12) with motor windings (24), wherein
the conductor (26) and the ammonia-resistant coating (28) are formed in two immediately successive extrusion steps.

## Revendications

1. Compresseur (10), notamment compresseur volumétrique semi-hermétique ou hermétique dévolu à la compression de NH₃, équipé d'un moteur électrique (12) muni d'enroulements (24) et au moins partiellement refroidi par NH₃,
**caractérisé par le fait que**
les enroulements (24) du moteur présentent un conducteur (26) produit en du cuivre, et un revêtement (28) résistant à l'ammoniac, sachant que
ledit conducteur (26), et ledit revêtement (28) résistant à l'ammoniac, sont formés en deux échelons d'extrusion opérés en succession directe.

2. Compresseur (10) selon la revendication 1,
**caractérisé par le fait que**
le revêtement (28) est produit en un matériau extrudable.

3. Compresseur selon l'une des revendications précédentes,
**caractérisé par le fait que**
le revêtement (28) est implanté directement sur le conducteur (26).

4. Compresseur selon l'une des revendications précédentes,
**caractérisé par le fait que**
ledit compresseur (10) est un compresseur semi-hermétique ou hermétique de NH₃, à refroidissement par gaz d'aspiration ou à refroidissement par pression de fluide, en particulier un compresseur semi-hermétique ou hermétique à vis, un compresseur à vis compact, semi-hermétique ou hermétique, un compresseur semi-hermétique ou hermétique à piston, à un étage ou à deux étages.

5. Procédé de fabrication d'un compresseur (10), notamment d'un compresseur volumétrique semi-hermétique ou hermétique dévolu à la compression de NH₃, équipé d'un moteur électrique (12) muni d'enroulements (24) et au moins partiellement refroidi par NH₃, ledit procédé incluant une étape de fabrication desdits enroulements (24) du moteur,
**caractérisé par le fait que**
l'étape de fabrication des enroulements du moteur comprend les étapes partielles suivantes :
- production d'un conducteur (26) dont le matériau est du cuivre ;
- chemisage dudit conducteur (26) à l'aide d'un revêtement (28) en un matériau résistant à l'ammoniac, sachant que
ledit conducteur (26), et ledit revêtement (28) résistant à l'ammoniac, sont formés en deux échelons d'extrusion opérés en succession directe.

6. Utilisation d'enroulements (24) de moteur dotés d'un conducteur (26) fabriqué en du cuivre, et d'un revêtement (28) résistant à l'ammoniac, en vue de fabriquer un moteur électrique (12) d'un compresseur volumétrique (10), notamment d'un compresseur semi-hermétique ou hermétique dévolu à la compression de NH₃, équipé d'un moteur électrique (12) muni d'enroulements (24) et au moins partiellement refroidi par NH₃, sachant que
ledit conducteur (26), et ledit revêtement (28) résistant à l'ammoniac, sont formés en deux échelons d'extrusion opérés en succession directe.
